# EUROPEAN PATENT SPECIFICATION

(11) **EP 4 011 200 B1**
(45) Date of publication and mention of the grant of the patent: **03.12.2025**
(21) Application number: 20213490.4
(22) Date of filing: 11.12.2020
(51) Int. Cl.: A01G 27/00, A01G 27/02

(54) **PLANT IRRIGATION APPARATUS, THE USE OF SUCH PLANT IRRIGATION APPARATUS IN A POT OR PLANTER AND A METHOD OF OPTIMIZING A PLANT IRRIGATION**
PFLANZENBEWÄSSERUNGSVORRICHTUNG, VERWENDUNG EINER SOLCHEN BEWÄSSERUNGSVORRICHTUNG IN EINEM TOPF ODER PFLANZGEFÄSS UND VERFAHREN ZUR OPTIMIERUNG DER PFLANZENBEWÄSSERUNG
APPAREIL D'IRRIGATION DE PLANTES, UTILISATION D'UN TEL APPAREIL D'IRRIGATION DE PLANTES EN POT OU DISPOSITIF DE PLANTATION ET PROCÉDÉ D'OPTIMISATION D'UNE IRRIGATION DE PLANTES

(43) Date of publication of application: 15.06.2022
(73) Proprietor: Spiro, Daniel S., Scottsdale, Arizona 85251 (US)
(72) Inventor: Spiro, Daniel S., Scottsdale, Arizona 85251 (US)
(74) Representative: AWA Sweden AB

(56) References cited:
- CN-U- 202 841 969
- CN-U- 204 697 658
- CN-U- 206 851 615
- CN-U- 206 949 129
- CN-U- 209 234 555

## Description

### Technical Field

The invention refers to a plant irrigation apparatus, the use of such plant irrigation apparatus in a pot or planter and a method of optimizing a plant irrigation.

### Technical Background

Home and office markets' demand for sustainable indoor plants is ever-growing. Plants enrich the indoor environment by enhancing rooms' ambience, absorbing carbon from the air and enriching the room's air with oxygen. Further, numerous academic studies speak of the psychological and medical healing attributes indoor plants deliver. Primary attributes commonly reported are stress relief and blood pressure reduction.

To grow and sustain indoor plants, the plants require water, adequate light, suitable nutrient, and a root retaining medium to anchor the plants' roots. Today's technology can resolve these basic needs growing plants indoors; however, the infrastructure of existing buildings was not designed to provide for sustainable plant growth. Such provisions include power, communication, illumination, and fluid circulatory systems, of which some today are expected to be incorporated to the building's structure. In addition, most users today would also require comfort amenities to minimize their burden in maintaining their indoor plants.

Further, there are risks associated with growing indoor plants in less than well-conceived indoor environments. For example, overwatering results in developing fungi, triggering respiratory illnesses, generating bad odors, damaging floor coverings, and/or damaging the ceiling below. Other examples include over or under illuminating the plants. All examples lead to shortening plant life.

The above examples cause undue stress on the plant. Such stress weakens the plant's resistance to bacteria and viruses. It also reduces the plant's ability to resist and repel microorganisms and pests. Pest infestation goes beyond just killing the plant. Once pests find a home in a plant, they proliferate to other indoor plants, adversely affecting the entire habitat.

Lastly, today's indoor plant selection menu is limited. Indoor plants today are selected by their ability to survive in existing building environments - an environment that was not configured to sustain plant growth. To overcome these legacy limitations, the present innovation teaches of an apparatus that is aware of the plant's surrounding environment employing controls to adapt the plant species' needs, relieving the space occupant from the responsibility of frequently attending to the plant's needs. In so doing, the present apparatus broadens the menu of plant species available for indoor planting.

CN 206 949 129 U discloses one example of an automatic watering device for household use.

CN 206 851 615 U discloses one example of an automatic watering tank.

### Summary

An object of the present invention is to provide a plant irrigation apparatus that at least partly overcome the drawbacks and issues mentioned above.

More precisely, the plant irrigation apparatus should be easily applicable to plants, bushes and trees arranged in a pot or planter.

The plant irrigation apparatus should allow it to be used without any need for any complete re-planting of the plant, bush or tree.

Another object is that the plant irrigation apparatus should allow to adapt the irrigation to the individual needs of a plant, bush or tree in view of ambient factors.

Yet another object is that the plant irrigation apparatus should allow automated, self-aware plant fluid storage and cultivation system capable of sustaining and growing plants inside a vessel over an extended time duration.

The plant irrigation apparatus should be able to monitor the health of the plant and adapt at least irrigation needs to determined health.

Yet another object is that the plant irrigation apparatus should be able to communicate with a remote client.

Another object is that the plant irrigation system should be able learn the physical environment surroundings and then optimize it's operation accordingly.

Another object is that the system should be able to be communicatedly coupled to local, nearby and remote I/O devices.

These and other objects are provided for by a plant irrigation apparatus to be disposed on top of plant bedding material in a vessel, the apparatus comprising:
a fluid tank being an open loop hollow tank comprising a passthrough gap, the fluid tank defining a central through opening in proximity to its vertical central axis, said passthrough gap allowing insertion of a plant stem into the central through opening and said through opening being configured to enable a plant stem to_grow through;
at least one fluid irrigation pipe disposed along at least one wall portion of the fluid tank;
an electrical pump having a fluid intake pipe disposed inside the fluid tank, and said pump being connected to the at least one fluid irrigation pipe, thereby conveying fluid from the fluid tank to the plant bedding material via the at least one fluid irrigation pipe;
and a control unit being received in a recess in the fluid tank, the control unit comprising at least one sensor, a processor and a memory with code, coupled to at least on of: a sensor, a transceiver, and output and input device wherein;
the control unit is configured to control the electrical pump and thereby the flow of fluid from the fluid tank to the plant bedding material based on at least one of: plant specie type, plant growth stage, sensed bedding material moisture level, sensed external ambient temperature, sensed external humidity level, other device/s sensed input, code embedded program parameters coupled to artificial intelligence algorithms, and remote instruction/s.

Accordingly, a plant irrigation apparatus is provided which is an automated, self-aware plant fluid storage and cultivation system capable of sustaining and growing plants inside a vessel over an extended time duration. The plant irrigation apparatus can sense, think, self-learn, and intelligently act, autonomously caring for both indoor and outdoor plants, imposing minimal maintenance and time demands on the space occupant.

The plant irrigation apparatus is configured to be disposed horizontally just below the plant vessel's rim resting on the plant's bedding material. The apparatus can be acquired already disposed in a vessel, be placed in an existing planted vessel, or be installed inside a new vessel along with bedding material and a plant. The process of adding the apparatus to a vessel is simple, requiring no technical skills.

The plant irrigation apparatus is an automated fluid storage enclosure and irrigation apparatus configured to be disposed inside a plant retaining vessel. The apparatus is primarily designed for indoor applications; however, it can operate in both indoor and outdoor environments. The apparatus is applicable no matter if it is a pot plant, a bush or a tree.

The plant irrigation apparatus comprises a control unit which may be used to detect and/or predict harmful handling of a plant and/or the surrounding environment due to uncommon changes prompting preemptive operational action in response to such detected anomalies. Further, the code of the control unit is configured to have the processor process in real time sensed data to prognosticate a plant health. For example, the plant irrigation apparatus can be used to provide information about the physical growth of a plant, prompting the pump to add or reduce fluid to the plant and/or alert user for a specific need for a nutrient. In another example, processed image can alert user about pest infestation. In yet another example, a processed image may show plant leaf discoloration, indicating that the plant is afflicted with a disease, alerting the user of the observation possibly with diagnostics and propose a specific remedy to heal the plant.

Accordingly, by the control unit and its cooperation with sensors, the processor, transceiver and output and input device, and related code, the plant irrigation system may be able to learn the physical environment surroundings and then optimize it's operation accordingly. Further, by the input and output device it may communicate with other local, nearby and remote input and output devices.

The control unit may be configured to control at least one of pumped fluid volume, irrigation frequency, and the duration of the irrigation.

The fluid tank may be an open loop hollow tank, the fluid tank having an interior side wall defining the at least one central through opening, an exterior side wall, a top wall and a bottom wall. By the open loop shape of the tank, the tank may be arranged to encircle the plant stem and hence provide a better coverage of the plant's root system which thereby will arrange below the fluid tank.

The open loop hollow tank comprises a passthrough gap allowing insertion of a plant stem into the at least one central through opening via said passthrough gap.

The passthrough gap enables passing a plant stem through the fluid tank before placing the tank on a leveled bedding material surface inside a vessel. The gap mitigates the problem of having to lower the fluid tank onto plant canopy where the plant canopy size is too large. The tank may thus be arranged to encircle the plant stem by moving the apparatus in a horizontal direction towards the plant stem. This allows the plant irrigation apparatus to be used with a plant, bush or tree without damaging it's canopy or root system. Also, the tank may easily be arranged to a pot or planter with an already planted item.

The at least one fluid irrigation pipe and at least one optional emitter coupled thereto may be detachable arranged along the at least one wall portion of the fluid tank. By making these components detachable, maintenance is facilitated. Typical maintenance refers to removal of deposits that tend to build up over time and which may block the fluid passages in the pipe and the optional emitter(s). Also, overall cleaning is facilitated if the fluid irrigation pipe and the at least one emitter is detachable. The fluid irrigation pipe and the at least one optional emitter may be detachable arranged by using snap-fits. Alternatively, the fluid irrigation pipe supporting the at least one optional emitter may be detachable supported by the fluid tank by an inherent tension in the fluid irrigation pipe, whereby the fluid irrigation pipe has a spring-back function which forces the fluid irrigation pipe into an abutment with a wall portion of the fluid tank.

The control unit may be detachable arranged to the fluid tank. This facilitates maintenance of the control unit and also access to its communication ports etc. without the need for removing the irrigation apparatus from the pot or planter.

The pump and/or the control unit may be received in a recess in the fluid tank. Thereby the pump will not project past the fluid tank which will make it less visible and eye-catching.

The apparatus may comprise at least one lighting module configured to irradiate at least one of: the fluid entering the fluid intake pipe of the pump and fluid surrounding the fluid intake pipe of the pump with UV light. By irradiating the fluid in any of these two positions, viruses, bacteria and organisms emersed in the fluid may be effectively killed. Thereby the risk of contaminating the bedding material and the plant's roots by the pumped irrigation fluid is reduced. Also, the risk of organic growth over time inside the fluid tank is reduced.

The fluid tank may comprise at least one fluid fill port. The at least one fluid fill port is preferably arranged on a top wall portion of the fluid tank.

The fluid tank may comprise at least one additive basket. The additive basket may be configured to be immersed in the fluid to be contained in the fluid tank. The additive basked may be filled with one or more substances such as nutritions, pH regulating substances and preventative additives against harmful bacteria, viruses, and other harmful organisms, which substance/substances over time will be absorbed by the plant via the fluid.

The fluid tank wall material may be non-light transmissive. By preventing light transmission into the tank, any organic growth inside the fluid tank may be further prevented.

The at least one sensor may be a sensor from the group consisting of a moisture sensor, a humidity sensor, a temperature sensor, a light sensor, an image sensor, and a bedding material moisture sensor. The moisture sensor is preferably configured to be received in the bedding material to thereby allow direct determination of the moisture level therein. The humidity sensor is preferably configured to be arranged in a position above intended level of bedding material, i.e. preferably on the top wall of the fluid tank or even above such top wall. The light sensor may be used to detect the level of incoming light in or adjacent to the pot or planter and its plant. Further, the image sensor, such as a camera, may be configured to detect vermin in the plant or its canopy or signs of damages in the canopy caused by the ambience such as too strong sunlight etc. The image data may be processed to alert the user about pest infestation. In yet another example, processed image data may show plant leaf discoloration, indicating that the plant is afflicted with a disease, alerting the user of the observation possibly with diagnostics and propose a specific remedy to heal the plant.

The one or more sensors may be integral parts physically connected to the apparatus or its control unit, or be wired or wireless connected to the control unit. The latter allows one or more sensors to be arranged in positions remote from the apparatus but yet in the ambience of the plant. Two or more sensors of the same type may be used in different locations to allow detection of the same feature but in different locations.

The processor may be arranged to, in real time, configure a plant illumination and irrigation needs by at least one of: programmatic parameters, AI code algorithm, learned operational behavior, onboard communicated data and sensed input/s and/or processed external communicated data and sensed input/s.

The sensed input may be received from one or more sensors which may be integral parts physically connected to the apparatus or its control unit, or be wired or wireless connected to the control unit.

The processor's controller may be configured, in real time, to address a plant illumination and irrigation needs by communicating a signal to at least one of: an external device and a vessel disposed device. One example of an external device may be a portable and/or stationary device such as a cell phone, a tablet or a PC whereby an operator may control and supervise the apparatus and hence the plant status from a remote position. A non-limiting example of a vessel disposed device is a display panel supported by the plant irrigation apparatus. The display panel may be configured to display text or text and images visually and may also have at least one touch screen attribute.

The apparatus may be arranged to be disposed on a bedding material being inorganic, light weight, relatively sterile and exhibit moisture retention properties as perlite or vermiculite.

According to another aspect, the invention relates to the use of a plant irrigation apparatus according to any of the features given above in a pot or planter. The plant irrigation apparatus as such and its advantages has been thoroughly described above and they are equally applicable to the use of such apparatus. Thus, to avoid undue repetition, reference is made to the discussion above.

According to yet another aspect, a method of optimizing a plant irrigation is provided. The method comprises the acts of:
providing a plant irrigation apparatus according to any of claims 1-15;
arranging the plant irrigation apparatus in a vessel containing a plant and bedding material with a moisture sensor inserted into the bedding material and with at least one additional sensor being arranged in a location different from the vessel, said at least one additional sensor being a sensor from the group comprising a humidity sensor, a temperature sensor, a light sensor, an image sensor, and a bedding material moisture sensor;
filling the fluid tank with irrigation fluid;
receiving, by a processor, a signal from any of the sensors, and based the received signal determine at least one of a plant's irrigation needs by at least one of programmatic parameters, onboard and/or external communicated data and sensed input/s; and
controlling, by using the control unit the electrical pump and thereby the flow of fluid from the fluid tank to the plant bedding material based on at least one of: plant specie type, plant growth stage, sensed bedding material moisture level, sensed external ambient temperature, sensed external humidity level, sensed image data, code embedded program parameters coupled to artificial intelligence algorithms, and remote instruction/s.

The plant irrigation apparatus as such and its advantages has been thoroughly described above and they are equally applicable to the method of using such apparatus to thereby optimize plant irrigation. Thus, to avoid undue repetition, reference is made to the discussion above.

According to yet another aspect, a non-transitory computer readable recording medium may be provided having computer readable program code recorded thereon which when executed on a device having processing capability is configured to perform the method.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 shows a partially exploded perspective view of the apparatus.
Fig. 2a is a schematic plan view of the fluid tank as seen from its passthrough gap side.
Fig. 2b is a schematic plan view of the fluid tank as seen from a side opposite to the passthrough gap.
Fig. 2c is a schematic plan view of the fluid tank as seen from its top.
Fig. 2d is a schematic plan view of the fluid tank as seen from its bottom.
Fig. 2e is a schematic cross section of the fluid tank as seen across its two tank caps.
Fig. 2f is a schematic cross section of the fluid tank as seen across its passthrough gap and the electronics housing seat.
Figs. 3a and 3b shows top and bottom perspectives of the electronics housing of the apparatus.
Figs. 4a and 4b disclose two opposing side views of the electronics housing.
Fig. 4c shows a rear side view of the electronics housing.
Fig. 4d shows a front side view of the electronics housing.
Fig. 4e shows a top view of the electronics housing.
Fig. 4f shows a bottom view of the electronics housing.
Fig. 5a shows one embodiment of an arrangement with fluid emitters coupled to the irrigation pipe.
Fig. 5b shows a partial view of the apparatus from above the electronics housing.
Fig. 6a shows a vertical section through the apparatus at electronics housing seat.
Figs. 6b shows a plan view of the fluid inlet pipe.
Fig. 6c show a section view of the fluid inlet pipe.
Fig. 7a discloses as schematic cross section of the apparatus as taken across the electronics housing when arranged in a vessel.
Fig. 7b discloses as schematic cross section of the apparatus as taken across the two tank caps when arranged in a vessel.
Figs. 8a,8b and 8c show three different geometries of the apparatus arranged in a pot and a planter vessel.
Figs. 9a, 9b, 9c, 9d, 9e and 9f show the step by step commissioning process for the apparatus.
Fig. 10 shows the plant irrigation apparatus elements' interactive relation in a block diagram.
Fig. 11 is a schedule disclosing the acts of a method of optimizing irrigation of a plant in a vessel.

### Detailed Description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

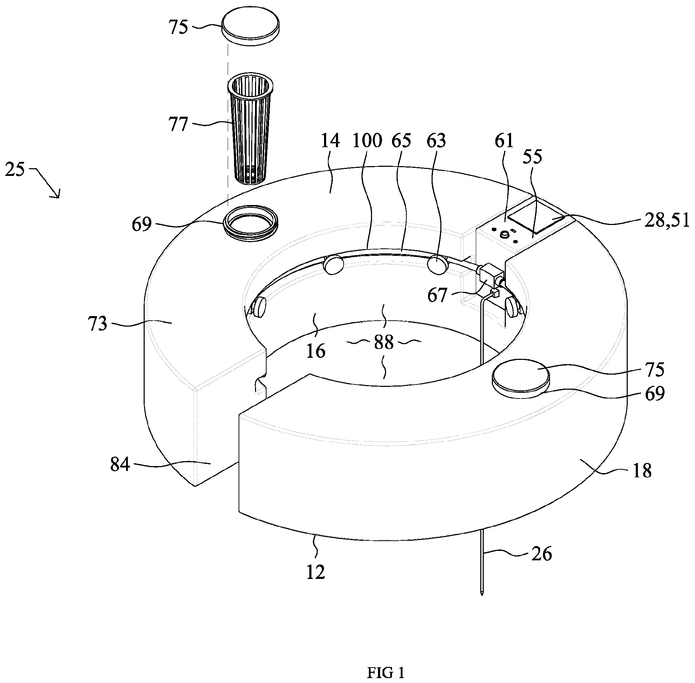

Starting with Fig. 1, the overall design of the fluid irrigation apparatus 25 is disclosed. The plant irrigation apparatus 25 comprises a fluid tank 73, an electronics housing 55, a pump 61 and an irrigation pipe 65 supporting a plurality of fluid emitters 63. The fluid tank 73 comprises in the disclosed embodiment two fill ports 69 which are used to fill the fluid tank 73 with irrigation fluid. The fill ports 69 are covered by a respective fluid cap 75. At least one of the two fill ports 69 are configured to receive an additive basket 77. The fluid tank 73 has an open loop shape with a passthrough gap 84. The details and the operation of the plant irrigation apparatus 25 will be further described below.

In the following the different parts of the apparatus will be discussed.

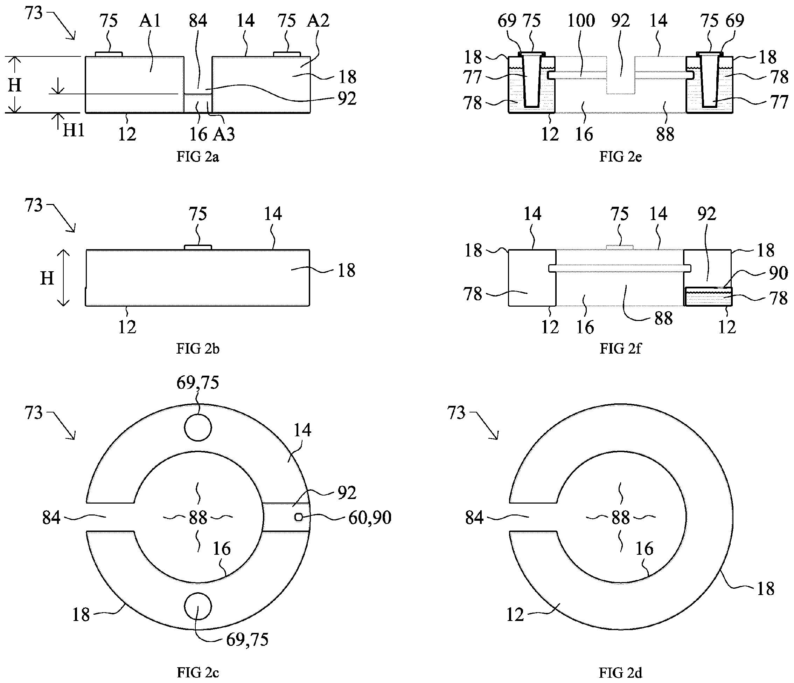

Referring to Figs. 2a-2f, the fluid tank 73 is disclosed. Starting with Figs. 2c and 2d a top and a bottom view of the fluid tank 73 is provided. The fluid tank 73 has an overall circular loop shape having an inner circumferential side wall 16 and an outer circumferential side wall 18, a top wall 14 and a bottom wall 12. The walls 16, 16, 12, 14 together define the hollow fluid tank 73. The inner and outer circumferential side walls 16, 18 are broken by a radially extending passthrough gap 84.

The inner circumferential side wall 16 defines an axially extending through opening 88. The through opening 88 is configured to receive a plant stem. The plant stem may be passed by a horizontal movement into the opening 88 via the passthrough gap 84 as will be described below.

As is seen in Fig. 2c, the top wall 14 of the fluid tank 73 comprises an axially and radially extending recess which forms an electronics housing seat 92. The electronics housing seat 92 comprises an intake port 90 configured to receive a fluid inlet pipe 72 of the pump 61 which will be discussed below. The electronics housing seat 92 is disclosed as being arranged diametrically opposite to the passthrough gap 84. The skilled person realizes that other positions are possible with remained function.

The top wall 14 further comprises two openings acting as fluid fill ports 69. Each port 69 is covered by a tank cap 75.

As is best seen in Fig. 2a being a side view of the fluid tank 73 as seen from the passthrough gap 84, the fluid tank 73 has a continuous horizontal extension past the electronics housing seat 92 to thereby constitute one single hollow volume. The sub-volumes A1, A2 on opposite sides of the electronics housing seat 92 are substantially larger than the sub-volume A3 vertically below the pump set 92.

As is best seen from Fig. 2a and Fig. 2b being a side view 90 degrees to the view of Fig, 2a, the outer circumferential side wall 18 of fluid tank 73 has a substantially uniform height H along its full circumferential extension with the exception of the portion of the side wall that extends along the electronics housing seat 92 which has a locally reduced height H1 to thereby form the recessed electronics housing seat 92.

Turning to Fig. 2e, a vertical cross section of the fluid tank 73 is shown as taken across the two fluid fill ports 69. The fluid tank 73 is schematically illustrated as being filled with irrigation fluid 78. Each fluid fill port 69 is receiving an additive basket 77. The additive basket 77 will be further discussed below.

Turning to Fig. 2f, a vertical cross section of the fluid tank 73 is shown as taken across the passthrough gap 84 and the electronics housing seat 92. Again, the fluid tank 73 is schematically illustrated as being filled with irrigation fluid 78.

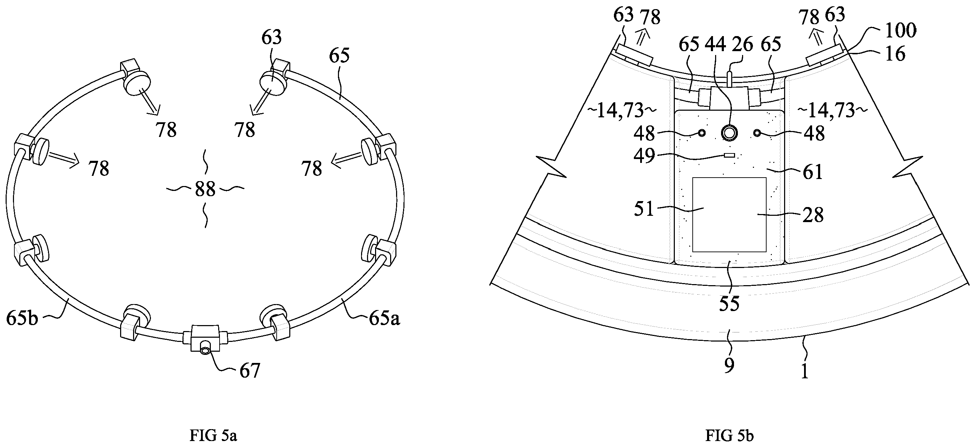

As is best seen in Figs 2e and 2f, the inner circumferential side wall is provided with a radially extending recess 100. The recess 100 is configured to receive a fluid irrigation pipe with at least one fluid emitter which will be discussed below. The fluid irrigation pipe is omitted in Figs. 2e and 2f but will be discussed below with reference to Fig. 5a and 5b.

The fluid tank 73 is preferably made of non-porous plastic material or material having similar properties. The tank's embodiment fabrication method can be at least one of injection molding and 3D printing. The embodiment is scalable both dimensionally and functionally. It is preferred that at least the top wall 14 and/or the inner and outer side walls 16, 18 of the fluid tank 73 are made of a non-light transmissive material. By preventing light transmission into the tank, any organic growth inside the fluid tank 73 may be prevented.

The fluid tank may have a volume from 0.5 liters up to several hundred liters depending on the size of the vessel and the plant.

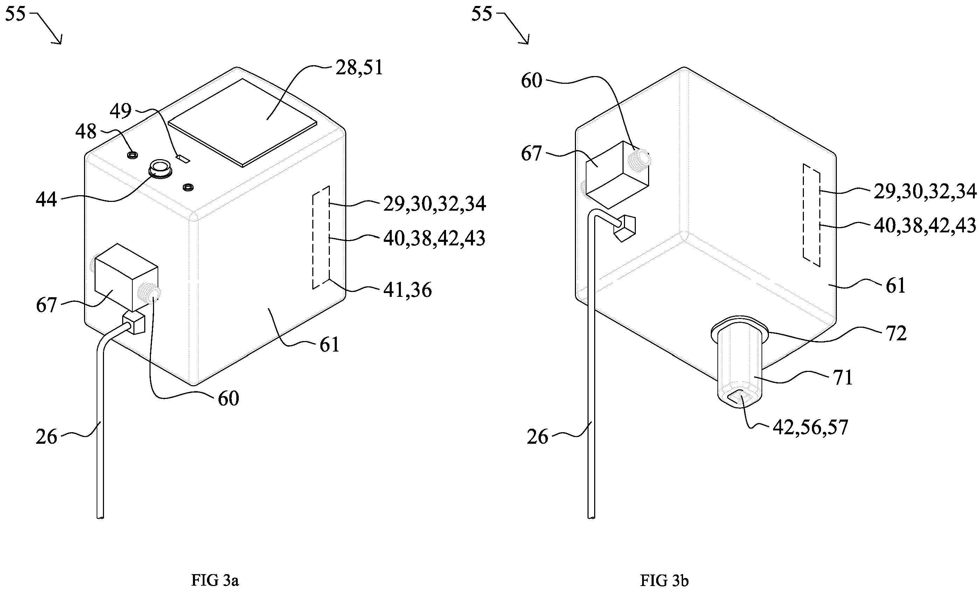

Now turning to Figs. 3a and 3b, top and bottom perspectives of the plant irrigation apparatus' electronics housing 55 are disclosed.

The electronics housing 55 is configured to be detachable mounted to the electronics housing seat 92 of the fluid tank 73 as is exemplified in Fig. 1. The electronics housing 55 comprises a pump 61 and a fluid inlet pipe 71. The fluid inlet pipe 71 is in a condition when the electronics housing 55 is mounted to the electronics housing seat 92 configured to extend into the hollow fluid tank 73 via the intake port 90 and a pipe coupler 60. Thus, the fluid inlet pipe 71 preferably has an axial length that allows it to reach the bottom wall of the fluid tank 73 and thereby access fluid therein even if the fluid level should be very low.

The electronics housing 55 bottom face is configured to be coupled to the electronics housing seat 92 with the fluid inlet pipe 71 configured to be submerged inside the fluid tank 73 (not shown in Figs 5a and 5b). An inlet pipe coupler 72 engages the inlet pipe 71, preventing the tank fluid 73 from exiting. The coupler 72 is configured to form a gas and air-tight seal, preventing fluid from exiting the fluid tank 73, with or without the fluid inlet pipe 71 engaged.

The fluid inlet pipe 71 supports a lighting module comprising a lighting device 42 in the form of a UV light source 56 and a protective light source cover 57. The lighting module is configured to irradiate at least one of: the fluid entering the fluid intake pipe 71 of the pump 61 and fluid surrounding the fluid intake pipe of the pump with UV light. By irradiating the fluid in any of these two positions, viruses, bacteria and organisms emersed in the fluid may be effectively killed. Thereby the risk of contaminating bedding material and a plant's roots by the pumped irrigation fluid is reduced. Also, the risk of organic growth over time inside the fluid tank is reduced.

The electronics housing 55 further comprises a detachable moisture sensor 26. The moisture sensor 26 is configured to be inserted into the bedding material of a vessel to thereby allow sensing of the moisture level in the bedding material. The moisture sensor 26 is disclosed as being supported by the side wall of the electronics housing which in use is configured to face the opening 88 of the fluid tank 73 and hence a plant. It is to be understood that the moisture sensor 26 with remained function may be supported by another surface of the electronics housing 55 or even the fluid tank 73. No matter position, the moisture sensor 26 should be arranged in communication with a control unit 29 forming part of the electronics housing 55.

The electronics housing 55 further comprises a fluid outlet port 67. The fluid outlet port 67 is disclosed as being supported by the side wall of the electronics housing which in use is configured to face the opening 88 of the fluid tank and hence the plant. It is to be understood that the fluid outlet port 67 with remained function may be supported by another surface of the electronics housing 55 or even the fluid tank 73 as long as it is fluid communication with the pump 61. The fluid outlet port 67 comprises pipe couplers 60. The pipe couplers 60 are configured to attach to the fluid irrigation pipe 65, see Fig. 1 to thereby allow fluid that is pumped from the fluid tank 73 via its fluid inlet pipe 71 to be emitted through the one or more fluid emitters 63. The pumped fluid will enter the fluid irrigation pipe 65 via the two pipe couplers 60 of the fluid outlet port 67. The skilled person realizes that the number of pipe couplers 60 depends on the design of the fluid irrigation pipe 65.

The top surface of the electronics housing 55 is configured to be accessible to a user when the plant irrigation apparatus 25 is received in a vessel.

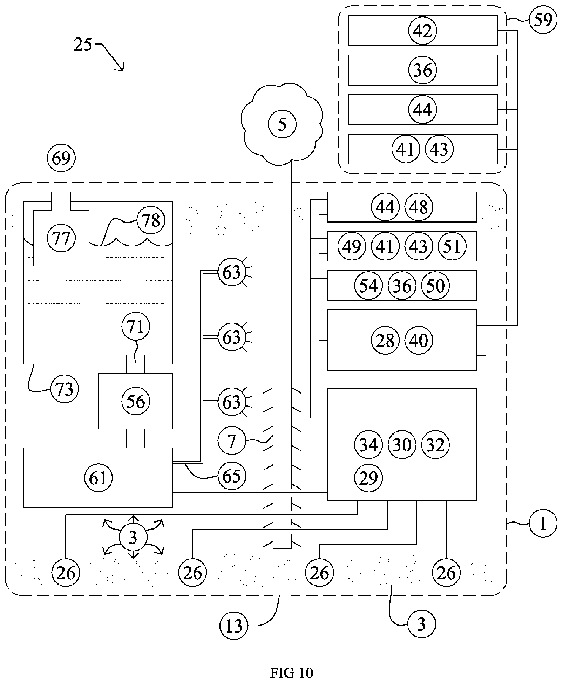

The top face of the electronics housing 55 is accessible for external device connectivity and in some applications visual and tactile interface. Elements shown highly schematically on the electronics housing 55 top surface include a power supply cover panel 28, a camera 44, a power port 48, a data port 49 and a screen display 51. Coupled to and typically housed inside the electronics housing 55 (not shown) is at least one of: a control unit 29, a processor 30 with a memory module 32 and code 34, the pump 61, a stepdown transformer 40, backup power 38, the lighting device 42, a microphone 43, a speaker 41, and a transceiver 36. These are schematically disclosed in the diagram in Fig. 10.

The electronics housing 55 is scalable configured proportionally to the fluid tank 73. The fluid tank's 73 electronics housing seat 92 is sized in accordance with the embodiment's mechanical and electronic devices to suit the operational needs of the variable scaled fluid tank 73.

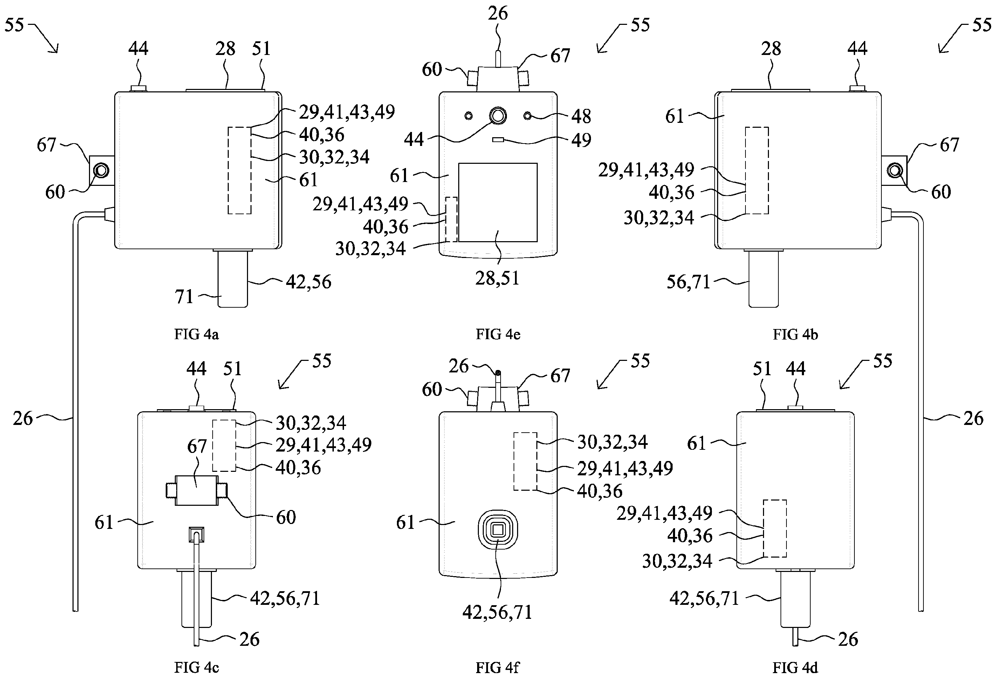

To further improve the understanding of the design of the electronics housing 55, Figs 4a, 4b, 4c, 4d, 4e and 4f show all elevational views of the electronics housing 55 which was discussed above with reference to Figs. 3a and 3b.

Figs. 4a and 4b show the electronics housing 55 side elevations that are configured to abut the fluid tank 73 walls inside the electronics housing's 55 seat recess 92. Elements shown include a cover for a power supply 28 compartment, the camera 44, the pipe coupler 60, the fluid outlet port 67, the lighting device 42 with the UV light source 56, the fluid inlet pipe 71 and the detachable moisture sensor 26 coupled. Elements coupled to the electronics housing 55 include the control unit 29 which comprises at least one of: a processor 30, a memory device 32, code 34, a pump 61, a speaker 41, a microphone 43, a data port 49, a power port 48, a transformer 40, and a transceiver 36.

Fig. 4c shows the electronics housing 55 elevation configured to face the plant irrigation apparatus 25 inner opening 88. Fig. 4d shows the electronics housing 55 elevation configured to face the vessel's inner face wall. Fig. 4e shows the top elevation of the electronics housing 55. Fig. 4f shows the bottom elevation of the electronics housing 55.

As given above, the fluid intake port 90 of the fluid tank 73 engages the electronics housing 55 fluid inlet pipe 71. Several coupler types can be employed preventing fluid egress when the electronics housing 55 is in position. In one embodiment (not shown) the coupler is self-sealing becoming engaged under momentary pressure. Once the electronics housing 55 is removed from the fluid tank 73, the coupler 60 seals the inlet port 90 preventing the fluid tank 73 fluid from exiting. In another embodiment (not shown) the fluid tank 73 pump 61 pressurizes the entire tank interior enclosure forcing fluid to exit through at least one opening below the top surface of bedding material 3 in the vessel 1. The opening/s can then be coupled to at least one fluid emitter 63.

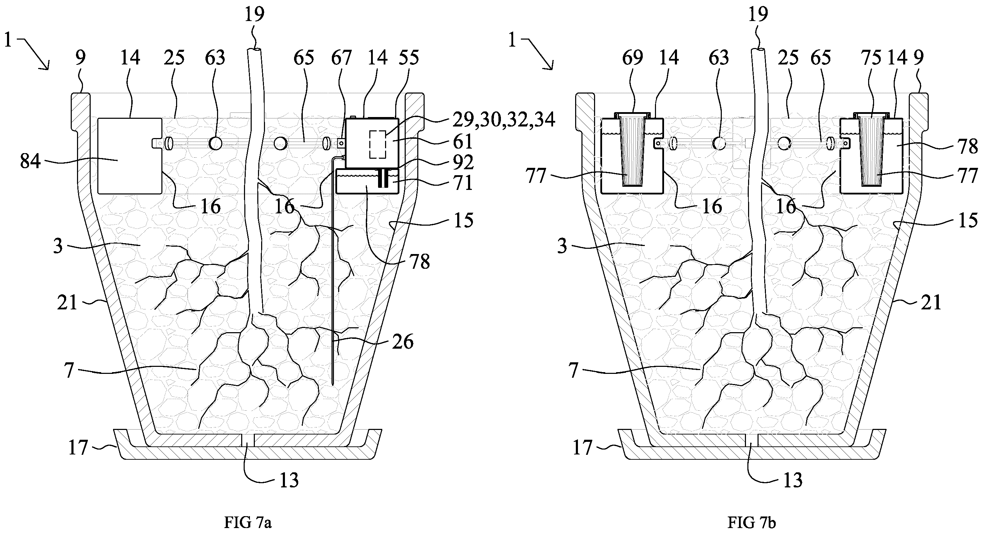

Now turning to Figs 5a and 5b, one embodiment of the irrigation pipe 65 supporting a plurality of emitters 63 is disclosed. It is to be stressed that the irrigation pipe 65 in its easiest form may be provided without emittors and instead be configured as a perforated pipe. While Fig. 5a shows a perspective view of the fluid emitters 63 coupled to the irrigation pipe 65, Fig. 7b shows how the irrigation pipe 65 connects to the electronics housing via its fluid outlet port 67.

The irrigation pipe 65 is in the disclosed embodiment formed as an open looped pipe which is formed by two pipe sections 65a, 65b which, via a respective free end, is connected to the fluid outlet port 67. The outlet port 67 is configured to be coupled to the electronics housing 55 having fluid 78 flowing through the pump 61 to the outlet port 67, see Fig. 5B. The coupling between the outlet port 78 and the electronics housing 55 is preferably detachable to facilitate maintenance or replacement of the irrigation pipe 65.

Each pipe section 65a, 65b of the irrigation pipe 65 supports a plurality of fluid emitters 63 that are distributed along the longitudinal extension of the irrigation pipe 65. Each emitter 63 has a fluid inlet arranged in fluid communication with the interior of the irrigation pipe 65 and a fluid outlet arranged in communication with the ambience to thereby allow fluid 78 to be emitted. Hence, each emitter 63 constitutes a nozzle. The irrigation pipe 65 is made of nonporous, flexible and corrosion resistant material.

The plant irrigation apparatus can employ at least one irrigation pipe 65 to flow fluid to the vessel's plant(s). The pipe/s form can follow the fluid tank 73 interior wall 16 as shown in Fig. 5b or Fig. 1. In these two embodiments, the irrigation pipe 65 is flexible received in the circumferential recess 100 of the inner circumferential wall 16 of the fluid tank 73. The irrigation pipe 65 may have a pre-shaped curvature, whereby when the irrigation pipe 65 is pushed into position in the recess100 of the inner circumferential wall 16 of the fluid tank 73, an inherent spring-back effect will keep it place in the recess 100.

The skilled person realizes that the irrigation pipe 65 may be kept in position by other means. In a non-disclosed embodiment, the irrigation pipe 65 may be kept in position by using one or more snap locks.

It is to be stressed that the irrigation pipe 65 with remained function may be arranged on other positions on the plant irrigation apparatus as long as it is in communication with the fluid flow from the pump. It may by way of example be arranged on the bottom wall 12 of the fluid tank 73 or along the outer circumferential side wall of the fluid tank 18. The irrigation pipe 65 may even be configured to be arranged in fluid communication with the pump via a flexible tube, thereby allowing the irrigation pipe 68 to be position in a vessel remote from the fluid tank 73.

In another embodiment of a fluid tank 73 (not shown), at least one wall of the fluid tank 73 has at least one opening for fluid 78 to enter the vessel 1. This embodiment not employing any irrigation pipe 65 can have at least one optional emitter 63 coupled to the fluid tank 73 and the tank's fluid can enter the vessel's interior space via the at least one optional emitter 63 from at least one of: the interior facing wall 16, the exterior wall 18 and the bottom facing wall 12. In the event no emitters are provided, the irrigation pipe may be a perforated pipe.

Fig. 5b shows a partial view of the plant irrigation apparatus 25 from above the electronics housing 55. The electronics housing 55 is disposed in the electronics housing seat 92 recess with its top surface approximately flush with the top surface of the fluid tank 73. The housing's side facing the vessels' inner face 15 can be formed to follow the form of the fluid tank 73 exterior wall 18.

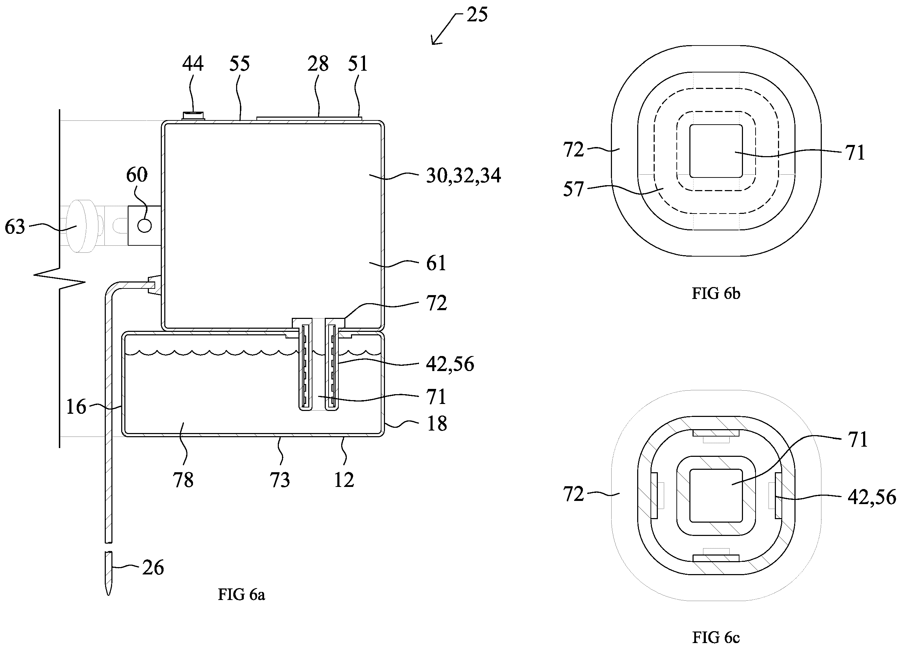

To further facilitate the understanding of the design of the inventive plant irrigation apparatus 25, Fig. 6a shows a vertical section through the plant irrigation apparatus 25 at the electronics housing seat 92. Figs. 6b and 6c show plan and section views of the fluid inlet pipe 71.

Starting with Fig. 6a. Aside from electronic and mechanical devices referenced in the figures above, this figure shows the fluid inlet pipe 71 extending into the fluid tank 73 submerged in fluid 78. In the present embodiment, the pump 61 disposed inside the electronics housing 55 pumps fluid from the tank 73 conveying the fluid outlet port 67 to the irrigation pipe/s 65.

In another embodiment (not shown), the pump 61 can reverse the flow of fluid 78 forcing the fluid under pressure the exit the fluid tank 73 at pre-configured egress ports. Regardless of the direction of the fluid 78 flow, the pump 61 is secured on to the fluid tank 73 the pipe coupler 72. The pipe coupler 72 forms a fluid and airtight seal preventing any liquid and gas infiltration.

The fluid inlet pipe 71 employs a lighting device 42 comprising an irradiating UV light source 56 eliminating bacteria, viruses, and harmful organisms before exiting the fluid tank 73. The present figure shows UV light source 56 modules disposed inside the fluid inlet pipe's 71 double wall. The UV light source 56 modules face the pipes' interior. In another embodiment the UV light source 56 can face the interior of the fluid tank 73. In yet another embodiment, the UV light source 56 can irradiate the fluid inside and outside the fluid inlet pipe 71.

Fig 6b shows an enlargement of the fluid inlet pipe 71 from a bottom view. On the outside perimeter the inlet pipe coupler 72 is shown. Inside, in dashed line are the pipe's 71 double walls housing the UV light source 56 modules. The fluid inlet pipe 71 aperture is shown at the center of the figure.

Fig. 6c shows a transverse cross-section through the fluid inlet pipe 71. The elements shown are the same as in the figure above. The fluid inlet pipe 71 pipe material is at least translucent in part allowing the maximum amount of light at the specified spectral light band wavelengths to pass through the pipe's 71 wall/s.

Now turning to Figures 7a and 7b, two vertical cross-sections of a vessel 1 in the form of a pot 21 with a plant irrigation apparatus 25 are disclosed. The plant irrigation apparatus 25 has the same design as that described above. The cross section in Fig. 7a is taken across the electronics housing 55 of the apparatus 25. The cross section in Fig. 7b is taken across the two tank caps 75. For clarity of the apparatus 25 in situ, Fig. 7a section is drawn perpendicular (90° degrees) to Fig. 7B.

The plant irrigation apparatus 25 is disposed just below the pot's rim 9 resting on plant bedding material 3. The pot 21 rests on an overflow plate 17. The pot 21 has a weep hole 13 at the center of its base. A partial plant stem 19 is shown emerging from the pot 21 with its root structure 7 embedded into the plant bedding material 3 below. In this figure the section cuts across the apparatus 25 embodiment through an electronics housing seat 92 which supports the control unit 55. On the opposite side the section cuts through the passthrough gap 84. In between the interior walls 16 of the apparatus 25, plant bedding material 3 is shown filled to approximately the apparatus' 25 fluid tank 73 top facing exterior wall 14.

The bedding material 3 may by way of example be inorganic, light weight, relatively sterile and exhibit moisture retention properties as perlite or vermiculite.

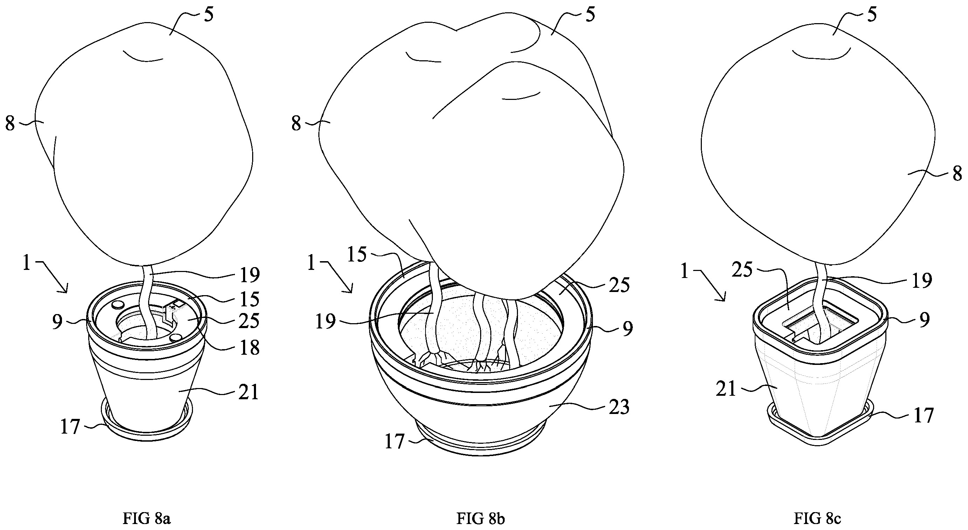

Now turning to Figs. 8a, 8b and 8c, the use of the fluid irrigation apparatus is schematically illustrated as being used in pots and a planter vessel together with a highly schematically disclosed plant 5 having a canopy 8 and a plant stem 19. For clarity, these figures do not show any bedding material.

Starting with Fig. 8a, a round vessel 1, referred herein as a pot 21 is schematically illustrated. The pot 21 rests on an overflow plate 17. Inside the pot 21 a plant stem 19 extends from a non-disclosed plant root below the plant canopy 8 above. The plant irrigation apparatus 25 is disposed inside the pot 21 just below the pot's rim 9. In this embodiment, the exterior perimeter wall 18 of the apparatus 25 is shown against an inner face 15 of the pot 21. It is to be understood that there may be a gap between the apparatus 25 exterior wall 18 and the inner face 15 of the pot 21. Further, it is to be understood that the width of such gap may vary along the inner face 15 of the pot 21 depending on if the apparatus 25 is centralized or not in the pot 21 and also if the pot has the same cross section as the apparatus 25.

Fig. 8b shows a round vessel 1, referred herein as a planter 23, resting on an overflow plate 17. The planter's 23 defining feature is typically its large size and ability to support the growth of several plants. The planter 23 is shown as receiving several plant stems 19 extending out from the plant's root 7. Thus, more than one plant may be irrigated by the apparatus 25.

Fig. 8c shows a square vessel 1, referred herein as a pot 21, resting on an overflow plate 17. The plant irrigation apparatus 25 received in the pot has an overall cross-sectional geometry that corresponds to the overall cross-sectional geometry of the pot 21. Hence, in this embodiment, the plant irrigation apparatus 25 has a square outer boundary. Accordingly, although the fluid irrigation apparatus 25 has been disclosed and exemplified as a substantially circular body, other shapes are possible within the scope of the invention. Non-limiting examples of possible shapes are circular, oval, triangular, quadrangular, heptagonal and hexagonal shapes.

Further, the plant irrigation apparatus 25 is dimensionally and functionally scalable and can be placed in any vessel form, including both pots and planters in indoor and exterior applications.

The plant apparatus 25 outer wall 18 generally follows the inner wall of a vessel 1 it is to be placed in. Common vessel 1 aperture forms come in round, square, rectangle, segmented and oblong. These apertures are scalable, whereas smaller vessels are referred to as pots 21 and larger vessels 1 are referred to as planters 23. The plant irrigation apparatus 25 is scalable and can be used in both pots 21 and planters 23 regardless of their height and/or width.

The plant may be any of a potted plant, a bush or a tree. One or more plants may be irrigated by one and the same plant irrigation apparatus.

Now turning to Figs 7a and 7b anew, the operation of the plant irrigation apparatus 25 will be discussed. The plant irrigation apparatus 25 electronic and mechanical elements are coupled to the fluid tank 73. On the top facing wall 14, the at least one fluid fill port 69 is filled with fluid 78. The port 69 is enclosed by the openable tank cap 75. An optional additive basket 77 inserted into the fluid tank 73 through the port 69 opening to provide time released nutrient and/or preventative additives against bacteria, virus, and harmful organisms.

The top facing wall 14 is arranged above the bedding material 3 to allow access to the electronics housing and its features arranged on its top surface such as the screen display 51 and communication ports to allow visual interface between the plant irrigation apparatus 25 and a user, but also to provide access to the at least one fluid fill port 69.

The processor 30 with memory module 32 and code 34 forming part of the control unit 29 controls the apparatus operation. The processor 30 is coupled inside to the electronics housing 55 disposed between two fluid tank 73 walls on the electronics housing seat 92. The fluid 78 inside the fluid tank 73 is pumped by the pump 61 coupled to the electronics housing 55 emerging through the fluid outlet port 67 and distributed through the irrigation pipe 65 to the fluid emitter/s 63. The fluid 78 emitted, then percolates by gravity down to the plant/s root 7 while also being absorbed by the plant bedding material 3.

The moisture sensor 26 with a sensing device disposed at its bottom end or along an extended portion of its length conveys a signal about the bedding material 3 moisture condition to the processor 30. Based on the received input, the processor 30 controls the fluid flow to the fluid emitter/s 63.

The electronics housing 55 can operate both indoors and outdoors. To withstand outdoor conditions, the housing 55 and exterior coupled elements can be rated for use in damp and/or wet location and with exterior surfaces fabricated of corrosive resistant material/s.

The housing 55 can employ several exterior ports. These ports can include at least one data port 49, a power port 48, a power supply 28 cover, a transformer 40 cover, and a fluid outlet port 67. In addition, an electronic display panel 51 can be coupled to the power supply 28 or the transformer 40 cover. The display panel 51 coupled to at least the processor 30 and the transceiver 36 facilitates a visual interface between the plant irrigation apparatus 25 and a user.

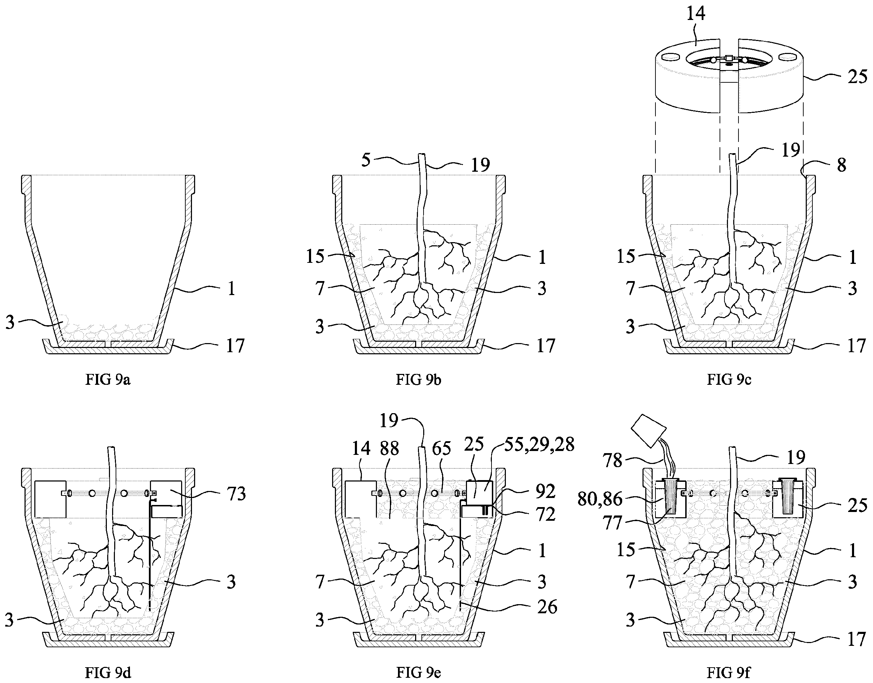

Now turning to Figs. 9a, 9b, 9c, 9d, 9e and 9f, a step by step commissioning process for the plant irrigation apparatus 25 is disclosed.

Fig. 9a - Place bedding material 3 at the bottom of a vessel 1. The vessel 1 can be placed on an overflow plate 17 to protect against flooding.

Fig. 9b - Place a plant 5 root 7 bulb over the base bedding material 3, fill the space between the plant's root 5 bulb and the inner face of the vessel 15 with more bedding material 3 and compact the material to form a leveled surface just above the root's 7 bulb.

Fig. 9c - Place the plant irrigation apparatus 25 over the plant canopy 8 and lower the apparatus 25 down to rest on the leveled surface. In the event the canopy 8 is too large, pass the plant's stem 19 through the passthrough gap 84 by a radial movement and then lower the apparatus 25 down to rest on the leveled surface.

Fig. 9d - Insert the moisture sensor 26 in the bedding material 3 leaving the fluid tank 73 exposed.

Fig. 9e - Place the electronics housing 55 on the electronics housing seat 92 engaging the fluid inlet pipe coupler 72, and connect the moisture sensor 26 receptacle and the fluid irrigation pipe 65 to the electronics housing 55. Then, fill the inner opening 88 space with more bedding material 3 to form a leveled surface just above the top facing wall 14 of the fluid tank 73.

Fig. 9f - Fill the fluid tank 73 with ample amount of fluid 78, add nutrient 86 and other additives 80 in the additive basket 77 as needed, program the device setting via the control unit 29, provide operational and plant material data when prompted, and then start the apparatus 25 operation. The apparatus 25 data interface can be through a wireless or wired handheld or desktop device. The electronics housing 55 can have a display panel on its top surface allowing visual and/or touch screen device interface.

At the time of commissioning, the vessel's 1 power supply 28 should preferably be fully charged or coupled to an external power supply.

Fig. 10 shows the apparatus elements' interactive relation in a block diagram. The apparatus 25 operates electrical devices inside a vessel 1 and can also interactively be coupled to external electrically powered devices. Fig. 10 shows the interaction between the fluid irrigation system and the processor's 30 control unit 29 governing the operation of the apparatus 25. Inside the vessel 1 all power systems are configured to operate on low voltage.

The irrigation fluid 78 enters the fluid tank 73 through the additive basket 77. The fluid 78 then enters the fluid inlet pipe 71 where UV light source 56 irradiates viruses, bacteria and organisms emersed in the fluid 78. The fluid then travels through the pump 61 out to the irrigation pipe 65. The irrigation pipe has at least one fluid emitter 63 that lets the fluid enter the vessel's bedding material 3 and the plant's roots 7. The apparatus processor's 30 control unit 29 governs the operation of the pump 61, modulating at least one of: the pump's 61 duration of operation, frequency of operation, and operation pressure.

Within the apparatus 25 vessel 1, the processor 30 is electrically coupled to at least one of: a power supply 28, a transformer 40, a display panel 51, a transceiver 36, a camera 44, the pump 61, the UV light source 56 , a light sensor 50, a moisture sensor 26, a humidity sensor 54, a data I/O port 49,a power I/O port 48 and a bedding material moisture sensor.

Externally (remote device/s 59) the processor's 30 control unit 29 can be coupled wirelessly or by wire to at least one of: a power supply 28, a transformer 40, a handheld, portable, desktop and a remote client electronic device (not shown), a transceiver 36, a camera 44, a light source 42, a light sensor 50 and a humidity sensor 54. The external lighting source 42 can be disposed over the plant canopy. The processor's 30 control unit 29 can wirelessly turn on/off and dim the external light source 42 by means of a non-disclosed microswitch.

Enclosing the diagram embodiment is the highly schematically disclosed vessel 1, and embedded in the vessel 1 between the fluid irrigation system and the electronic device assembly is an exemplary plant 5 with a plant stem 19 and a root 7 system embedded in bedding material 3.

The processor 30 and code 34 may be configured to autonomously operate the plant irrigation apparatus 25 or operate in conjunction with input received from a remote user or a remote device. The code 34 can have at least one self-learning AI (artificial intelligence) algorithm that optimizes the plant irrigation apparatus 25 operation. Evaluating past operation, this algorithm customizes the operation of the apparatus 25 to the specific environment where the vessel 1 is placed. The code's 34 algorithms can perform at least one of: sense the environmental conditions in which the plant grows, know the plant species' growth need requirements, consider the occupant's preferences and have partial or full control over the sensing, output, and communication systems, as well as all other auxiliary systems 59 of the plant irrigation apparatus 25, such as different sensors. Examples of sensors are the moisture sensor 26, an occupancy sensor 52, a humidity sensor 54, a temperature sensor 53, a light sensor 50, an image sensor, i.e. the camera 44 and a bedding material moisture sensor.

Any of the humidity sensor 54, the temperature sensor 5, and the camera 44 may be arranged remotely in view of the plant irrigation apparatus to thereby compile information from different positions in the location and from different view of the plant. Several cameras 44 may be provided to get image information from different positions of the canopy as will be discussed below.

The code 34 may be configured to in real time receive input, evaluate the input with local or local and remote information and parameters, and decide on the best course of action to improve the apparatus' operational utility. The plant irrigation apparatus 25 code 34 may be configured to perform at least one of these tasks:
a. Recognize the needs of the plant planted or to be planted in the vessel
b. Be aware of the vessel moisture level
c. Be aware of the light level intensity and/or spectrum surrounding the plant vessel
d. Be aware of the humidity level surrounding the plant vessel
e. Be aware of plant disease by observing plant foliage
f. Be aware of pest infestation by observing the plant's stem and foliage
g. Recognize need for adding or reducing plant nutrient by observing plant foliage
h. Recognize plant growing/blooming/pollination needs by observing plant foliage
i. Retain operational schedule that can include overriding and prioritizing logic
j. Receive instruction/data from remote location or local and remote location
k. Prompt sending instruction/alert/data to remote location
l. Recognize environmental and operational anomalies
m. Provide information about the plant specie
n. Evaluate past performance and apply best results toward future operation
o. Process all inputs in real time to operationally configure best course of action to optimize the plant's sustainable growth

The code 34 may be configured to predict the harmful results to a plant 5 and/or the surrounding environment due to uncommon changes prompting preemptive operational action in response to such anomalies. It may also operationally plan and prioritize devices operation. Further, the code 34 may be configured to have the processor 30 process in real time sensed data to prognosticate a plant 5 health. For example, images received by the camera 44 can provide information about the physical growth of a plant, prompting the pump 61 to add or reduce fluid 78 to the plant 5 and/or alert user for a specific need for a nutrient 86. In another example, processed image information captured by the image sensor of the camera 44 may alert user about pest infestation. In yet another example, a processed image may show plant leaf discoloration, indicating that the plant 5 is afflicted with a disease, alerting the user of the observation possibly with diagnostics and propose a specific remedy to heal the plant 5.

To perform the code 34 driven tasks, the processor 30 is coupled to at least one of: a sensing device, an input/output device and an auxiliary device. The sensing device can include at least one of: the moisture sensor 26, an occupancy sensor 52, a humidity sensor 54, a temperature sensor 53, the camera 44, and a light sensor 50. One or more of these sensors may be arranged remote from the electronics housing 55 and communicate with the processor 30 in a wired or a wireless manner.

The input, output or input/output device can include at least one of: the transformer 40, the power supply 28, the pump 61, a speaker 41, a microphone 43, a light source 42,56, a dehumidifier 45 and a transceiver 36.

The auxiliary devices 59 which are typically disposed remotely from the vessel 1 can include at least one of: a transformer 40, an external power supply 28, a dehumidifier 45, a camera 44, a transceiver 36, and an auxiliary light source. For example, the auxiliary lighting source can be placed over the vessel 1 wherein the plant irrigation apparatus 25 processor 30 can wirelessly activate the auxiliary light source's microswitch on and off or dim the light over the plant 5 when needed. In addition, the light can be modulated at the optimal spectral bandwidth.

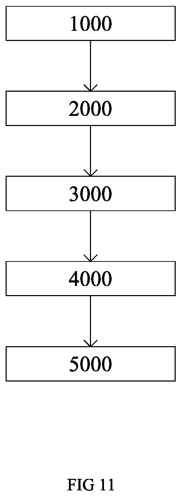

Now turning to Fig. 11, the steps of a method of optimizing irrigation of a plant in a vessel is provided. The method comprising the following acts.

Providing 1000 a plant irrigation apparatus 25 of the type that has been discussed and exemplified above.

Arrange 2000 the plant irrigation apparatus 25 in a vessel 1 containing a plant 5 and bedding material 3 with a moisture sensor 26 inserted into the bedding material 3 and with at least one additional sensor being arranged in a location different from the vessel 1, said at least one additional sensor being a sensor from the group comprising a humidity sensor 54, a temperature sensor 53, a light sensor 50, an image sensor 44 and a bedding material moisture sensor.

Fill 3000 the fluid tank 73 with irrigation fluid 78.

Receive 4000, by the processor 30, a signal from any of the sensors 54, 53, 50, 44, and based the received signal determine at least one of a plant's irrigation needs by at least one of programmatic parameters, onboard and/or external communicated data and sensed input/s. and

Control 5000, by using the control unit 29, the electrical pump 61 and thereby the flow of fluid from the fluid tank 73 to the bedding material 3 based on at least one of: plant specie type, plant growth stage, sensed bedding material moisture level, sensed external ambient temperature, sensed external humidity level, sensed image data, code embedded program parameters coupled to artificial intelligence algorithms, and remote instruction/s.

To summarize, a plant irrigation apparatus 25 configured to be disposed inside a plant retaining vessel 1 is provided. The plant irrigation apparatus 25 is primarily designed for indoor applications; however, it can operate in both indoor and outdoor environments.

The plant irrigation apparatus is configured to be disposed horizontally just below a plant vessel's rim resting on the plant's bedding material. The plant irrigation apparatus can be acquired already disposed in a vessel, be placed in an existing planted vessel, or be installed inside a new vessel along with bedding material and a plant. The process of adding a plant irrigation apparatus to a vessel is simple, requiring no technical skills. To facilitate ease of installation, the fluid tank has a passthrough gap across its outer perimeter wall and its inner perimeter wall. Adding a plant irrigation apparatus to an existing planted vessel or new vessel is accomplished by passing the plant's stem through the passthrough gap and then lowering the embodiment onto the bedding material. The passthrough gap resolves disturbing the plant's canopy by avoiding having to pass the plant's canopy through the apparatus' central opening.

Planting a new plant/s in a new vessel begins by spreading base bedding material at the vessel's bottom. Next, the plant's root bulb is placed on the bedding material base layer. Then, additional bedding material is filled between the outer face of the plant/s root bulb/s and the inner face of the vessel. Next, the bedding material is compacted to form a leveled bedding material surface above the root bulb. Following that, the fluid tank is placed on the leveled bedding material surface. Then the moisture sensor sensing end is embedded in the bedding material. Next, the electronics housing is placed on the electronics housing seat. Then the moisture sensor and the fluid irrigation pipe are coupled to the electronics housing. Following that, data and operational setting are entered into the plant irrigation apparatus processor. Then the inner opening of the fluid tank is filled with bedding material leveling just above the tank's top facing wall. Next, as needed nutrients and additives are placed in or poured through the additive basket. Irrigation fluid is then poured through the fluid fill port. Finally, the plant irrigation apparatus' electromechanical operation is started by sending a wired or wireless command or simply by pushing a button on the electronics housing interface screen display.

In applications where a plant already grows in a vessel, adding the plant irrigation apparatus requires removing the top layers of the plant's bedding material at the vessel's aperture opening and then repeating the steps as described above beginning with ... *embedding the moisture sensor sensing end in the bedding material.*

The apparatus' embodiment can have several forms. This application shows embodiments' forms that are configured to have at least one central opening to allow plant/s to grow through. In other embodiments (not shown), the embodiment form is configured to enable plants to grow between its tank's exterior wall/s and the vessel's inner face. Yet another embodiment form enables plant growth through the inner opening and beyond the exterior wall/s of the plant irrigation apparatus embodiment inside a vessel.

With some embodiments, the fluid tank may be truncated resulting in a volumetric hub like enclosure with a gap. The gap referred herein as the passthrough gap enables passing a plant stem through the fluid tank before placing the tank on a leveled bedding material surface inside a vessel. The gap mitigates the problem of having to lower the fluid tank onto plant canopy where the plant canopy size is too large.

The plant irrigation apparatus is an automated, self-aware, and interactive fluid storage and plant irrigation apparatus governed and controlled by a processor with resident memory and code. The code can be accessed through an onboard interface display panel or by remote communication device. The processor is coupled and operationally integrated with at least one of: a sensing device, an input device, and an output device. It can also be wired to or communicatively coupled to auxiliary I.O.T (internet of things) device/s remotely disposed.

Commissioning a plant irrigation apparatus begins with associating the plant specie growing or to be grown in the vessel with the apparatus' processor. The processor can have a unique electronic address (IP address), and so can at least one of the devices operated and controlled by the processor.

Associating the plant specie with the processor can be done through an onboard interface, by wired connectivity to an external device, or wirelessly. The onboard interface can include a display panel. The display panel can display text or text and images visually and may also have at least one touch screen attribute. Remote interaction can be by means of a portable and/or stationary device. The plant irrigation apparatus transceiver can communicatively couple onboard devices to local or local and remote users.

The devices coupled to the processor can be sensed and assigned and mapped to the processor's local network by auto configuration code or be associated manually. The plant specie data can be embedded in the memory device module or be downloaded once a means of communication is established. Once all operational devices have been recognized by the processor along with recognizing the needs of the plant specie to be grown in the vessel 1, the code can then prompt the user to input the user's operational preferences. Then, the plant irrigation apparatus is ready to operate.

Additionally, variations to the disclosed embodiments can be understood and effected by the skilled person in practicing the claimed invention, from a study of the drawings, the disclosure and the appended claims.

## Claims

1. A plant irrigation apparatus (25) to be disposed on top of plant bedding material (3) in a vessel (1), the apparatus (25) comprising
a fluid tank (73) being an open loop hollow tank comprising a passthrough (84) gap, the fluid tank (73) defining a central through opening (88) in proximity to its vertical central axis, said passthrough gap (84) allowing insertion of a plant stem (19) into the central through opening (88) and said through opening (88) being configured to enable the plant stem (19) to grow through;
at least one fluid irrigation pipe (65) disposed along at least one wall portion (16, 18) of the fluid tank (73);
an electrical pump (61) having a fluid intake pipe (71) disposed inside the fluid tank (73), and said pump (61) being connected to the at least one fluid irrigation pipe (65), thereby conveying fluid (78) from the fluid tank (73) to the plant bedding material (3) via the at least one fluid irrigation pipe (65);
and a control unit (29) being received in a recess in the fluid tank (73), the control unit (29)
comprising at least one sensor (26, 50, 53, 54, 44), a processor (30) and a memory module (32)with code (34), coupled to at least on of: a sensor, a transceiver (36), and output and an input device, wherein;
the control unit (29) is configured to control the electrical pump (61) and thereby the flow of fluid (78) from the fluid tank (73) to the plant bedding material (3) based on at least one of: plant specie type, plant growth stage, sensed bedding material moisture level, sensed external ambient temperature, sensed external humidity level, other device/s sensed input, code embedded program parameters coupled to artificial intelligence algorithms, and remote instruction/s.

2. The plant irrigation apparatus (25) according to claim 1, wherein the control unit (29) is configured to control at least one of pumped fluid volume, irrigation frequency, and the duration of the irrigation.

3. The plant irrigation apparatus (25) according to claim 1 or 2, wherein the fluid tank (73)has an interior side wall (16) defining the at least one central through opening (88), an exterior side wall (18), a top wall (14) and a bottom wall (12).

4. The plant irrigation apparatus (25) according to any of the preceding claims,
wherein the at least one fluid irrigation pipe (65) and at least one optional emitter (63) coupled thereto is detachable arranged along the at least one wall portion (12, 14, 16, 18) of the fluid tank (73).

5. The plant irrigation apparatus (25) according to any of the preceding claims, wherein the control unit (29) is detachable arranged to the fluid tank (73).

6. The plant irrigation apparatus (25) according to any of the preceding claims, wherein the pump (61) is received in a recess (100) in the fluid tank (73).

7. The plant irrigation apparatus (25) according to any of the preceding claims,
wherein the apparatus comprises at least one lighting module (42; 56) configured to irradiate at least one of: the fluid (78) entering the fluid intake pipe (71) of the pump (61) and fluid (78) surrounding the fluid intake pipe (71) of the pump (61) with UV light.

8. The plant irrigation apparatus (25) according to any of the preceding claims, wherein the fluid tank (73) comprises at least one fluid fill port (69).

9. The plant irrigation apparatus (25) according to any of the preceding claims, wherein the fluid tank (73) comprises at least one additive basket (77).

10. The plant irrigation apparatus (25) according to any of the preceding claims, wherein the fluid tank wall (12, 14, 16, 18) material is non-light transmissive.

11. The plant irrigation apparatus (25) according to any of the preceding claims,
wherein the at least one sensor is a sensor from the group consisting of a moisture sensor (26), a humidity sensor (54), a temperature sensor (53), a light sensor (50), an image sensor (44) and a bedding material moisture sensor.

12. The plant irrigation apparatus (25) according to any of the preceding claims,
wherein the processor (30) is arranged to, in real time, configure a plant illumination and irrigation needs by at least one of: programmatic parameters, AI code algorithm, learned operational behavior, onboard communicated data and sensed input/s and/or processed external communicated data and sensed input/s.

13. The plant irrigation apparatus (25) according to any of the preceding claims, wherein the processor's (30) controller (29) is configured, in real time, to address a plant illumination and irrigation needs by communicating a signal to at least one of an external device and a vessel disposed device

14. The plant irrigation apparatus (25) according to any of the preceding claims, wherein the bedding material (3) the apparatus (25) is disposed on is inorganic, light weight, relatively sterile and exhibit moisture retention properties as perlite or vermiculite

15. Use of a plant irrigation apparatus (25) according to any of claims 1-14 in a pot (21) or planter (23).

16. Method of optimizing a plant irrigation, the method comprising the acts of:
Providing (1000) a plant irrigation apparatus (25) according to any of claims 1-14;
Arranging (2000) the plant irrigation apparatus (25) in a vessel (1) containing a plant (5) and bedding material (3) with a moisture sensor (26) inserted into the bedding material (3) and with at least one additional sensor being arranged in a location different from the vessel (1), said at least one additional sensor being a sensor from the group comprising a humidity sensor (54), a temperature sensor (53), a light sensor (50), an image sensor (44) and a bedding material moisture sensor;
filling (3000) the fluid tank (73) with irrigation fluid (78);
receiving (4000), by a processor (30), a signal from any of the sensors (26, 54, 53, 50, 44), and based the received signal determine at least one of a plant's irrigation needs by at least one of programmatic parameters, onboard and/or external communicated data and sensed input/s; and
controlling (5000), by using the control unit (29) the electrical pump (61) and thereby the flow of fluid (78) from the fluid tank (73) to the plant bedding material (3) based on at least one of: plant specie type, plant growth stage, sensed bedding material moisture level, sensed external ambient temperature, sensed external humidity level, sensed image data, code embedded program parameters coupled to artificial intelligence algorithms, and remote instruction/s.

## Patentansprüche

1. Pflanzenbewässerungsvorrichtung (25) zur Anordnung auf Pflanzeneinbettmaterial (3) in einem Gefäß (1), wobei die Vorrichtung (25) Folgendes umfasst:
einen Fluidtank (73), bei dem es sich um einen Hohltank mit offenem Kreislauf handelt, umfassend einen Spalt für einen Durchgang (84), wobei der Fluidtank (73) in der Nähe seiner vertikalen Mittelachse eine zentrale Durchgangsöffnung (88) definiert, wobei der Durchgangsspalt (84) das Einsetzen eines Pflanzenstamms (19) in die zentrale Durchgangsöffnung (88) ermöglicht und die Durchgangsöffnung (88) konfiguriert ist, um das Hindurchwachsen des Pflanzenstamms (19) zu ermöglichen;
mindestens ein Fluidbewässerungsrohr (65), das entlang mindestens eines Wandabschnitts (16. 18) des Fluidtanks (73) angeordnet ist;
eine elektrische Pumpe (61) mit einem Fluideinlassrohr (71), das im Inneren des Fluidtanks (73) angeordnet ist, wobei die Pumpe (61) mit dem mindestens einen Fluidbewässerungsrohr (65) verbunden ist, wodurch Fluid (78) aus dem Fluidtank (73) über das mindestens eine Fluidbewässerungsrohr (65) zum Pflanzeneinbettmaterial (3) befördert wird;
und eine Steuereinheit (29), die in einer Aussparung in dem Fluidtank (73) aufgenommen ist, wobei die Steuereinheit (29) mindestens einen Sensor (26, 50, 53, 54, 44), einen Prozessor (30) und ein Speichermodul (32) mit Code (34) umfasst, verbunden mit mindestens einem der Folgenden: einem Sensor, einem Sende-Empfänger (36) und einer Ausgabe- und einer Eingabevorrichtung, wobei;
die Steuereinheit (29) konfiguriert ist, um die elektrische Pumpe (61) und dadurch den Fluss von Fluid (78) von dem Fluidtank (73) zu dem Pflanzeneinbettmaterial (3) auf Grundlage von mindestens einem der Folgenden zu steuern: dem Pflanzenspeziestyp, dem Pflanzenwachstumsstadium, dem erfassten Feuchtigkeitsgrad des Einbettmaterials, der erfassten externen Umgebungstemperatur, dem erfassten externen Luftfeuchtigkeitsgrad, einer erfassten Eingabe einer oder mehrerer anderer Vorrichtungen, in Code eingebetteten Programmparametern, die mit Algorithmen künstlicher Intelligenz verbunden sind, und einem oder mehreren ortsfernen Befehlen.

2. Pflanzenbewässerungsvorrichtung (25) nach Anspruch 1, wobei die Steuereinheit (29) konfiguriert ist, um mindestens eines der Folgenden zu steuern: das gepumpte Fluidvolumen, die Bewässerungshäufigkeit und die Dauer der Bewässerung.

3. Pflanzenbewässerungsvorrichtung (25) nach Anspruch 1 oder 2, wobei der Fluidtank (73) eine innere Seitenwand (16), die die mindestens eine zentrale Durchgangsöffnung (88) definiert, eine äußere Seitenwand (18), eine obere Wand (14) und eine untere Wand (12) aufweist.

4. Pflanzenbewässerungsvorrichtung (25) nach einem der vorhergehenden Ansprüche, wobei das mindestens eine Fluidbewässerungsrohr (65) und mindestens ein optionaler, damit verbundener Emitter (63) lösbar entlang mindestens eines Wandabschnitts (12, 14, 16, 18) des Fluidtanks (73) angeordnet sind.

5. Pflanzenbewässerungsvorrichtung (25) nach einem der vorhergehenden Ansprüche, wobei die Steuereinheit (29) lösbar an dem Fluidtank (73) angeordnet ist.

6. Pflanzenbewässerungsvorrichtung (25) nach einem der vorhergehenden Ansprüche, wobei die Pumpe (61) in einer Aussparung (100) in dem Fluidtank (73) aufgenommen ist.

7. Pflanzenbewässerungsvorrichtung (25) nach einem der vorhergehenden Ansprüche, wobei die Vorrichtung mindestens ein Beleuchtungsmodul (42; 56) umfasst, das konfiguriert ist, um mindestens eines der Folgenden mit UV-Licht zu bestrahlen: das in das Fluideinlassrohr (71) der Pumpe (61) eintretende Fluid (78) und das Fluideinlassrohr (71) der Pumpe (61) umgebendes Fluid (78).

8. Pflanzenbewässerungsvorrichtung (25) nach einem der vorhergehenden Ansprüche, wobei der Fluidtank (73) mindestens eine Fluideinfüllöffnung (69) umfasst.

9. Pflanzenbewässerungsvorrichtung (25) nach einem der vorhergehenden Ansprüche, wobei der Fluidtank (73) mindestens einen Zusatzkorb (77) umfasst.

10. Pflanzenbewässerungsvorrichtung (25) nach einem der vorhergehenden Ansprüche, wobei das Material der Fluidtankwand (12, 14, 16, 18) nicht lichtdurchlässig ist.

11. Pflanzenbewässerungsvorrichtung (25) nach einem der vorhergehenden Ansprüche, wobei es sich bei dem mindestens einen Sensor um einen Sensor aus der Gruppe bestehend aus einem Feuchtigkeitssensor (26), einem Luftfeuchtigkeitssensor (54), einem Temperatursensor (53), einem Lichtsensor (50), einem Bildsensor (44) und einem Einbettmaterial-Feuchtigkeitssensor handelt.

12. Pflanzenbewässerungsvorrichtung (25) nach einem der vorhergehenden Ansprüche, wobei der Prozessor (30) angeordnet ist, um in Echtzeit einen Pflanzenbeleuchtungs- und -bewässerungsbedarf anhand von mindestens einem der Folgenden zu konfigurieren: programmtechnischen Parametern, einem Kl-Code-Algorithmus, einem erlernten Betriebsverhalten, im System übermittelten Daten und einer oder mehreren erfassten Eingaben und/oder verarbeiteten extern übermittelten Daten und einer oder mehreren erfassten Eingaben.

13. Pflanzenbewässerungsvorrichtung (25) nach einem der vorhergehenden Ansprüche, wobei die Steuereinheit (29) des Prozessors (30) konfiguriert ist, um in Echtzeit einem Pflanzenbeleuchtungs- und - bewässerungsbedarf zu entsprechen, indem sie ein Signal an mindestens eine externe Vorrichtung und eine in dem Gefäß angeordnete Vorrichtung übermittelt.

14. Pflanzenbewässerungsvorrichtung (25) nach einem der vorhergehenden Ansprüche, wobei das Einbettmaterial (3), auf dem die Vorrichtung (25) angeordnet ist, anorganisch, leicht und relativ steril ist und feuchtigkeitsspeichernde Eigenschaften aufweist, wie Perlit oder Vermiculit.

15. Verwendung einer Pflanzenbewässerungsvorrichtung (25) nach einem der Ansprüche 1-14 in einem Topf (21) oder Pflanzenbehälter (23).

16. Verfahren zum Optimieren einer Pflanzenbewässerung, wobei das Verfahren die folgenden Schritte umfasst:
Bereitstellen (1000) einer Pflanzenbewässerungsvorrichtung (25) nach einem der Ansprüche 1-14;
Anordnen (2000) der Pflanzenbewässerungsvorrichtung (25) in einem Gefäß (1), das eine Pflanze (5) und Einbettmaterial (3) enthält, wobei ein Feuchtigkeitssensor (26) in das Einbettmaterial (3) eingesetzt ist und wobei an einer anderen Stelle als dem Gefäß (1) mindestens ein weiterer Sensor angeordnet ist, wobei es sich bei dem mindestens einen weiteren Sensor um einen Sensor aus der Gruppe umfassend einen Luftfeuchtigkeitssensor (54), einen Temperatursensor (53), einen Lichtsensor (50), einen Bildsensor (44) und einen Einbettmaterial-Feuchtigkeitssensor handelt;
Füllen (3000) des Fluidtanks (73) mit Bewässerungsfluid (78);
Empfangen (4000) eines Signals von einem der Sensoren (26, 54, 53, 50, 44) durch einen Prozessor (30) und Bestimmen mindestens eines Bewässerungsbedarfs einer Pflanze auf Grundlage des empfangenen Signals anhand von mindestens einem aus programmgesteuerten Parametern, im System und/oder extern übermittelten Daten und einer oder mehreren erfassten Eingaben; und
Steuern (5000) der elektrischen Pumpe (61) und damit des Flusses von Fluid (78) von dem Fluidtank(73) zu dem Pflanzeneinbettmaterial (3) durch Verwendung der Steuereinheit (29) auf Grundlage von mindestens einem der Folgenden: dem Pflanzenspeziestyp, dem Pflanzenwachstumsstadium, dem erfassten Feuchtigkeitsgrad des Einbettmaterials, der erfassten externen Umgebungstemperatur, dem erfassten externen Luftfeuchtigkeitsgrad, erfassten Bilddaten, in Code eingebetteten Programmparametern, die mit Algorithmen künstlicher Intelligenz verbunden sind, und einem oder mehreren ortsfernen Befehlen.

## Revendications

1. Appareil d'irrigation de plantes (25) destiné à être disposé au-dessus d'un matériau de paillage pour plantes (3) dans un récipient (1), l'appareil (25) comprenant un réservoir de fluide (73) étant un réservoir creux à boucle ouverte comprenant un espace de passage (84), le réservoir de fluide (73) définissant une ouverture centrale traversante (88) à proximité de son axe central vertical, ledit espace de passage (84) permettant l'insertion d'une tige de plante (19) dans l'ouverture centrale traversante (88) et ladite ouverture traversante (88) étant configurée pour permettre à la tige de plante (19) de pousser à travers ;
au moins un tuyau d'irrigation de fluide (65) disposé le long d'au moins une partie de paroi (16, 18) du réservoir de fluide (73) ;
une pompe électrique (61) comportant un tuyau d'admission de fluide (71) disposé à l'intérieur du réservoir de fluide (73), et ladite pompe (61) étant reliée à l'au moins un tuyau d'irrigation de fluide (65), transportant ainsi le fluide (78) du réservoir de fluide (73) vers le matériau de paillage (3) par l'intermédiaire de l'au moins un tuyau d'irrigation de fluide (65) ;
et une unité de commande (29) étant logée dans un évidement du réservoir de fluide (73), l'unité de commande (29) comprenant au moins un capteur (26, 50, 53, 54, 44), un processeur (30) et un module de mémoire (32) avec un code (34), couplé à au moins un des éléments suivants : un capteur, un émetteur-récepteur (36) et un dispositif de sortie et d'entrée, dans lequel ;
l'unité de commande (29) est configurée pour commander la pompe électrique (61) et ainsi le débit de fluide (78) provenant du réservoir de fluide (73) vers le matériau de paillage (3) sur la base d'au moins l'un des éléments suivants : le type d'espèce végétale, le stade de croissance des plantes, le niveau d'humidité détecté dans le matériau de paillage, la température ambiante externe détectée, le niveau d'humidité externe détecté,
les données d'entrée détectées par d'autres dispositifs, les paramètres de programme intégrés à des algorithmes d'intelligence artificielle et les instructions à distance.

2. Appareil d'irrigation de plantes (25) selon la revendication 1, dans lequel l'unité de commande (29) est configurée pour commander au moins l'un des éléments suivants : le volume de fluide pompé, la fréquence d'irrigation et la durée de l'irrigation.

3. Appareil d'irrigation de plantes (25) selon la revendication 1 ou la revendication 2, dans lequel le réservoir de fluide (73) comporte une paroi latérale intérieure (16) définissant l'au moins une ouverture centrale traversante (88), une paroi latérale extérieure (18), une paroi supérieure (14) et une paroi inférieure (12).

4. Appareil d'irrigation de plantes (25) selon l'une quelconque des revendications précédentes, dans lequel le au moins un tuyau d'irrigation de fluide (65) et au moins un émetteur optionnel (63) qui y est couplé est amovible et disposé le long de la au moins une partie de paroi (12, 14, 16, 18) du réservoir de fluide (73).

5. Appareil d'irrigation de plantes (25) selon l'une quelconque des revendications précédentes, dans lequel l'unité de commande (29) est disposée de manière amovible sur le réservoir de fluide (73).

6. Appareil d'irrigation de plantes (25) selon l'une quelconque des revendications précédentes, dans lequel la pompe (61) est logée dans un évidement (100) dans le réservoir de fluide (73).

7. Appareil d'irrigation de plantes (25) selon l'une quelconque des revendications précédentes, dans lequel l'appareil comprend au moins un module d'éclairage (42 ; 56) configuré pour irradier au moins l'un des éléments suivants : le fluide (78) entrant dans le tuyau d'admission de fluide (71) de la pompe (61) et le fluide (78) entourant le tuyau d'admission de fluide (71) de la pompe (61) avec de la lumière UV.

8. Appareil d'irrigation de plantes (25) selon l'une quelconque des revendications précédentes, dans lequel le réservoir de fluide (73) comprend au moins un orifice de remplissage de fluide (69).

9. Appareil d'irrigation de plantes (25) selon l'une quelconque des revendications précédentes, dans lequel le réservoir de fluide (73) comprend au moins un panier d'additifs (77).

10. Appareil d'irrigation de plantes (25) selon l'une quelconque des revendications précédentes, dans lequel le matériau de la paroi du réservoir de fluide (12, 14, 16, 18) n'est pas transparent à la lumière.

11. Appareil d'irrigation de plantes (25) selon l'une quelconque des revendications précédentes, dans lequel le au moins un capteur est un capteur choisi parmi le groupe comprenant un capteur d'humidité (26), un capteur d'humidité (54), un capteur de température (53), un capteur de lumière (50), un capteur d'image (44) et un capteur d'humidité du matériau de paillage.

12. Appareil d'irrigation de plantes (25) selon l'une quelconque des revendications précédentes, dans lequel le processeur (30) est agencé pour configurer en temps réel les besoins d'éclairage et d'irrigation des plantes à l'aide d'au moins l'un des éléments suivants : des paramètres programmatiques, un algorithme de code IA, un comportement opérationnel appris, des données communiquées embarquées et des entrées détectées et/ou des données communiquées externes traitées et des entrées détectées.

13. Appareil d'irrigation de plantes (25) selon l'une quelconque des revendications précédentes, dans lequel le contrôleur (29) du processeur (30) est configuré pour répondre en temps réel aux besoins d'éclairage et d'irrigation des plantes en communiquant un signal à au moins un dispositif externe et un dispositif disposé dans un récipient.

14. Appareil d'irrigation de plantes (25) selon l'une quelconque des revendications précédentes, dans lequel le matériau de paillage (3) sur lequel l'appareil (25) est disposé est de la vermiculite inorganique légère.

15. Utilisation d'un appareil d'irrigation de plantes (25) selon l'une quelconque des revendications 1 à 14 dans un pot (21) ou une jardinière (23).

16. Procédé d'optimisation de l'irrigation des plantes, le procédé comprenant les étapes suivantes : la fourniture (1000) d'un appareil d'irrigation des plantes (25) selon l'une quelconque des revendications 1 à 14 ;
la disposition (2000) de l'appareil d'irrigation de plantes (25) dans un récipient (1) contenant une plante (5) et un matériau de paillage (3), avec un capteur d'humidité (26) inséré dans le matériau de paillage (3) et au moins un capteur supplémentaire disposé à un emplacement différent du récipient (1), ledit au moins un capteur supplémentaire étant un capteur du groupe comprenant un capteur d'humidité (54), un capteur de température (53), un capteur de lumière (50), un capteur d'image (44) et un capteur d'humidité du matériau de paillage ; le remplissage (3000) du réservoir de fluide (73) avec un fluide d'irrigation (78) ; la réception (4000), par un processeur (30), d'un signal provenant de l'un quelconque des capteurs (26, 54, 53, 50, 44), et la détermination, sur la base du signal reçu, d'au moins l'un des besoins d'irrigation d'une plante à partir d'au moins l'un des paramètres programmatiques, des données embarquées et/ou externes communiquées et des entrées détectées ; et
la commande (5000), à l'aide de l'unité de commande (29), la pompe électrique (61) et, par conséquent, le débit de fluide (78) provenant du réservoir de fluide (73) vers le matériau de paillage (3) de la plante, en fonction d'au moins l'un des éléments suivants : le type d'espèce végétale, le stade de croissance de la plante, le niveau d'humidité détecté du matériau de paillage, la température ambiante externe détectée, le niveau d'humidité externe détecté, les données d'image détectées, les paramètres de programme intégrés au code associés à des algorithmes d'intelligence artificielle et les instructions à distance.
